# EUROPEAN PATENT APPLICATION

(11) **EP 4 704 452 A1**
(43) Date of publication of application: **04.03.2026**
(21) Application number: 24795766.5
(22) Date of filing: 29.03.2024
(51) Int. Cl.: H04W 4/70, B63G 8/00, B63H 1/00, B63H 5/00, E04H 4/16, G01S 15/93, G01S 17/93, G05D 1/00, B63B 59/10, G05D 1/242, G05D 1/246, G05D 107/00, G05D 109/10, G05D 109/30, G05D 109/50, G05D 1/648, G05D 105/10, G05D 111/20

(54) **ROBOT, AND CONTROL METHOD FOR ROBOT**

(30) Priority: 27.04.2023 CN 202310473863; 04.05.2023 CN 202310490745; 07.06.2023 CN 202310671769; 13.07.2023 CN 202310862067
(71) Applicant: Xingmai Innovation Technology (Suzhou) Co., Ltd., Suzhou, Jiangsu 215124 (CN)
(72) Inventor: ZHANG, Shilei, Suzhou, Jiangsu 215124 (CN)
(74) Representative: Huang, Liwei
(86) International application number: PCT/CN2024/084822
(87) International publication number: WO 2024/222385

(57) **Abstract**

The present disclosure provides a robot and a robot control method. The robot includes a robot body. The robot body at least includes a control unit, a distance measurement unit, and a moving mechanism provided on the robot body. The distance measurement unit is connected to the control unit and configured to detect a distance between the robot and an obstacle. The moving mechanism is connected to the control unit and configured to drive the robot to move. The moving mechanism at least includes a first moving mechanism. The first moving mechanism is configured to drive the robot to move in a first operating environment. The distance measurement unit at least includes a first distance measurement sensor and a second distance measurement sensor provided on different surfaces of the robot. The first distance measurement sensor is configured to detect obstacle information in a first direction. The second distance measurement sensor is configured to detect obstacle information in a second direction. The control unit controls, based on the obstacle information in the first direction and the obstacle information in the second direction, the moving mechanism to move in the first operating environment. According to the present disclosure, operating efficiency of the robot can be improved.

## Description

### CROSS REFERENCE TO RELATED APPLICATIONS

This application claims priority to Chinese Patent Application No. 202310473863X, filed with the China National Intellectual Property Administration on April 27, 2023 and entitled "ROBOT CONTROL METHOD AND APPARATUS", Chinese Patent Application No. 202310490745X, filed with the China National Intellectual Property Administration on May 4, 2023 and entitled "INFORMATION INTERACTION METHOD, SYSTEM, AND APPARATUS, STORAGE MEDIUM, AND ELECTRONIC DEVICE", Chinese Patent Application No. 2023106717695, filed with the China National Intellectual Property Administration on June 7, 2023 and entitled "METHOD FOR CONTROLLING TARGET SUBSTANCE TO BE RELEASED AND TARGET SUBSTANCE RELEASING ASSEMBLY", and Chinese Patent Application No. 2023108620675, filed with the China National Intellectual Property Administration on July 13, 2023 and entitled "TARGET MAP CONSTRUCTING METHOD, STORAGE MEDIUM, AND POOL ROBOT", which are incorporated herein by reference in their entireties.

### TECHNICAL FIELD

The present disclosure relates to the technical field of robots, and in particular, to a robot and a robot control method.

### BACKGROUND

With development of science and technology, robots emerge. However, a structure of the existing robot is simple, and most of the robots move along a random trajectory. Consequently, operating efficiency of the robot cannot be ensured. An example in which the pool is a pool robot is used. The pool robot cleans a pool along a random trajectory, leading to an extremely poor full-coverage cleaning effect of the robot and a serious missed-cleaning problem. As a result, a pool cleaning effect of the pool robot is not ideal.

### SUMMARY

The present disclosure provides a robot and a robot control method, to improve operating efficiency of the robot.

To resolve the above technical problem, a first aspect of the present disclosure provides a robot. The robot includes a robot body. The robot body at least includes a control unit, a distance measurement unit, and a moving mechanism provided on the robot body. The distance measurement unit is connected to the control unit and configured to detect a distance between the robot and an obstacle. The moving mechanism is connected to the control unit and configured to drive the robot to move. The moving mechanism at least includes a first moving mechanism. The first moving mechanism is configured to drive the robot to move in a first operating environment. The distance measurement unit at least includes a first distance measurement sensor and a second distance measurement sensor provided on different surfaces of the robot. The first distance measurement sensor is configured to detect obstacle information in a first direction. The second distance measurement sensor is configured to detect obstacle information in a second direction. The control unit controls, based on the obstacle information in the first direction and the obstacle information in the second direction, the moving mechanism to move in the first operating environment.

To resolve the above technical problem, a second aspect of the present disclosure provides a robot system. The robot system at least includes a robot body, a station, and a terminal. The robot body is the robot body in the first aspect.

To resolve the above technical problem, a third aspect of the present disclosure provides a robot control method. The method includes: obtaining first sensing information collected by a first sensor in a first direction of a robot; obtaining second sensing information collected by a second sensor in a second direction of the robot, where the first direction is a forward direction of the robot, and an angle difference between a right angle and an included angle between the second direction and the first direction is less than a preset angle; and controlling, based on the first sensing information and the second sensing information, the robot to move in a target swimming pool, where the robot is configured to clean the target swimming pool. The controlling the robot to move in a target swimming pool includes at least one of the following: if a distance between the robot and a first obstacle in the first direction is less than a first preset value, controlling the robot to move toward a third direction away from the second direction, where the distance is indicated by the first sensing information; or if a distance between the robot and a second obstacle in the second direction is greater than a second preset value, controlling the robot to deviate in the second direction to reduce the distance between the robot and the second obstacle in the second direction, where the distance is indicated by the second sensing information.

### BRIEF DESCRIPTION OF THE DRAWINGS

FIG. 1 is a schematic diagram of a frame structure of a first implementation of a robot according to the present disclosure;
FIG. 2 is a schematic structural diagram of a second implementation of a robot according to the present disclosure;
FIG. 3 is a schematic structural diagram of a third implementation of a robot according to the present disclosure;
FIG. 4 is a schematic diagram of a frame of a robot system according to an embodiment of the present disclosure;
FIG. 5 is a schematic flowchart of a first implementation of a robot control method according to the present disclosure;
FIG. 6 is a schematic flowchart of a second implementation of a robot control method according to the present disclosure;
FIG. 7 is a schematic flowchart of a target map constructing method according to an embodiment of the present disclosure;
FIG. 8 is a schematic diagram of Euler angles according to an embodiment of the present disclosure;
FIG. 9 is a schematic flowchart of a method for controlling a pool robot to release a target substance in a target water region according to an embodiment of the present disclosure;
FIG. 10 is a schematic flowchart of a third implementation of a robot control method according to the present disclosure;
FIG. 11 is a schematic diagram of a frame structure of a robot according to an embodiment of the present disclosure; and
FIG. 12 is a schematic diagram of a frame of a computer-readable storage medium according to an embodiment of the present disclosure.

### DETAILED DESCRIPTION

The following clearly and completely describes the technical solutions in embodiments of the present disclosure with reference to the accompanying drawings in embodiments of the present disclosure. Clearly, the described embodiments are merely some but not all of embodiments of the present disclosure. All other embodiments obtained by a person of ordinary skill in the art based on embodiments of the present disclosure without creative efforts shall fall within the protection scope of the present disclosure.

It should be noted that the terms "first", "second", and the like in embodiments of the present disclosure are merely intended for a purpose of description, and shall not be understood as an indication or implication of relative importance or an implicit indication of a quantity of indicated technical features. Therefore, a feature limited by "first" or "second" may explicitly or implicitly include at least one of the features.

An "embodiment" mentioned in this specification indicates that a particular feature, structure, or characteristic described with reference to this embodiment may be included in at least one embodiment of the present disclosure. The phrase shown in various positions in this specification may not necessarily refer to a same embodiment, and is not an independent or optional embodiment exclusive from another embodiment. It is explicitly and implicitly understood by a person skilled in the art that embodiments described in this specification may be combined with another embodiment.

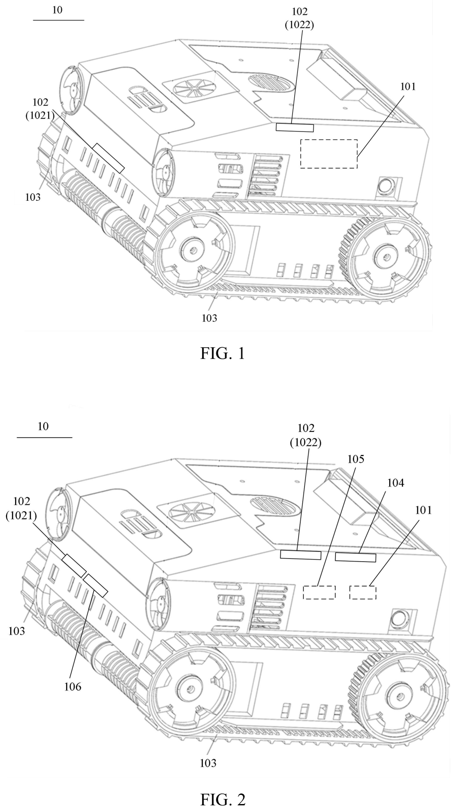

Refer to FIG. 1. FIG. 1 is a schematic diagram of a frame structure of a first implementation of a robot according to the present disclosure. The robot includes a robot body 10. At least a control unit 101, a distance measurement unit 102, and a moving mechanism 103 are provided on the robot body. In an embodiment, the moving mechanism 103 includes a first moving mechanism. The first moving mechanism is configured to drive the robot to move in a first operating environment. In other words, when the robot is in the first operating environment, the first moving mechanism is configured to control the robot to move. The distance measurement unit 102 includes a first distance measurement sensor 1021 and a second distance measurement sensor 1022. The first distance measurement sensor 1021 is configured to detect obstacle information in a first direction. The second distance measurement sensor 1022 is configured to detect obstacle information in a second direction. Each of the first distance measurement sensor 1021 and the second distance measurement sensor 1022 may be an ultrasonic sensor, an infrared sensor, a TOF (Time of Flight) sensor, and the like. It may be understood that the first distance measurement sensor 1021 and the second distance measurement sensor 1022 may be the same or different. The control unit 101 can control, based on the obstacle information in the first direction and the obstacle information in the second direction, the moving mechanism 103 to move in the first operating environment. The first direction may be a forward direction of the robot, and the second direction may be a direction substantially perpendicular to the first direction. In other words, an angle difference between a right angle and an included angle between the second direction and the first direction is less than a preset angle. The preset angle is set by a user. For example, the preset angle ranges from 0 to 10°. The first operating environment may be an underwater environment or a non-underwater environment. The non-underwater environment includes a water surface. When the robot is located on the water surface, the robot may be completely located on a waterline or partially located under the waterline.

According to the above solution, the first distance measurement sensor and the second distance measurement sensor are provided on the robot body, so that the robot can detect obstacle information in different directions, and an appropriate motion trajectory can be planned for the robot. Compared with a case in which the robot moves randomly, this can significantly improve operating efficiency of the robot.

In another embodiment, the robot further includes a second moving mechanism. The second moving mechanism is configured to control the robot to move in a second operating environment. The second operating environment is different from the first operating environment. For example, the first operating environment is the underwater environment, and the second operating environment is the non-underwater environment. The control unit can determine a current environment in which the robot is located and select the first moving mechanism and/or the second moving mechanism based on the current environment in which the robot is located. In a specific embodiment, the first moving mechanism may be a track wheel (indicated by 103 in FIG. 1), and the second moving mechanism may be a propeller for water surface cleaning (not shown in the figure). When the robot is in the underwater environment, the robot may be driven by the track wheel to move, or the robot may be jointly driven by the track wheel and the propeller to move. When the robot is in the non-underwater environment, the robot is at least partially exposed above the water surface, or the robot submerges and is close to the water surface. In this case, the robot may be driven by the propeller for water surface cleaning to move, or the robot may be jointly driven by the propeller for water surface cleaning and the track wheel to move. The robot may be a pool robot, a swimming pool robot, an underwater robot, or the like.

In an embodiment, the obstacle information in the first direction indicates a first distance between the robot and a first obstacle in the first direction. That the control unit 101 controls, based on the obstacle information in the first direction and the obstacle information in the second direction, the moving mechanism to move in the first operating environment includes: When the first distance reaches a first maximum threshold, the control unit 101 controls the robot to move toward a third direction. Specifically, the control unit may first control the robot to reduce a moving speed and then control the robot to rotate to the third direction. The third direction is opposite to the second direction.

In a specific embodiment, that when the first distance reaches a first maximum threshold, the control unit 101 first controls the robot to reduce a moving speed and then controls the robot to rotate to a third direction may be implemented in any one of the following manners. Manner 1: When the first distance reaches the first maximum threshold, the control unit 101 controls the robot to reduce the moving speed, where when the first distance reaches a first minimum threshold, the moving speed of the robot is zero; and when the first distance reaches the first minimum threshold, the control unit controls the robot to rotate to the third direction. Manner 2: When the first distance reaches the first maximum threshold, the control unit 101 controls the robot to reduce the moving speed. When the first distance reaches a first minimum threshold, the moving speed of the robot is zero. When the first distance reaches the first minimum threshold, the control unit controls the robot to move toward a fourth direction for a preset distance. The fourth direction is opposite to the first direction. When the robot moves toward the fourth direction for the preset distance, the control unit controls the robot to rotate to the third direction. The first minimum threshold is less than the first maximum threshold. Manner 3: When the first distance reaches the first maximum threshold, the control unit 101 controls the robot to reduce the moving speed and rotate toward the third direction at a preset rotation speed. Because in a process in which the robot rotates toward the third direction at the preset rotation speed, a value detected by the first distance measurement sensor gradually increases or the first distance measurement sensor does not detect data, the second distance measurement sensor may be used to determine whether the robot rotates to the third direction. When the second distance measurement sensor 1022 detects the value, it indicates that the robot finishes making a turn, that is, the robot rotates to the third direction.

In an embodiment, the obstacle information in the second direction indicates a second distance between the robot and a second obstacle in the second direction. That the control unit 101 controls, based on the obstacle information in the first direction and the obstacle information in the second direction, the moving mechanism to move in the first operating environment includes: When the second distance is within a preset range, the control unit 101 controls the robot to move in a direction parallel to the second obstacle, or when the second distance is within a preset range, the control unit 101 controls the robot to rotate toward the second direction at a preset rotation speed, and when the second distance reaches a second minimum threshold, the control unit 101 controls the robot to move in a direction parallel to the second obstacle, where the second minimum threshold is less than a minimum value within the preset range; and when the second distance is not within the preset range, the control unit 101 controls the robot to approach the second obstacle until the second distance reaches the second minimum threshold, and when the second distance reaches the second minimum threshold, the control unit 101 controls the robot to move in the direction parallel to the second obstacle.

Refer to FIG. 2. FIG. 2 is a schematic structural diagram of a second implementation of a robot according to the present disclosure. In an embodiment, in addition to the control unit 101, the distance measurement unit 102, and the moving mechanism 103, an obstacle detection unit 104, a first position detection unit 105, and a target sensor 106 are provided on the robot body 10. The obstacle detection unit 104 is, but is not limited to, a sensor, an image capturing device, a radar, or the like, and may be mounted at any position on the robot body based on a type of the obstacle detection unit 104. In an embodiment, the obstacle detection unit 104 may be mounted on any side of the robot, may be provided inside the robot body 10, or may be provided outside the robot body 10. Certainly, the obstacle detection unit 104 may be the first distance measurement sensor 1021 and/or the second distance measurement sensor 1022. In a specific embodiment, as shown in FIG. 2, the obstacle detection unit 104 is provided outside the robot body 10. The obstacle detection unit 104 is configured to detect a target obstacle in a target water region in a moving process of the robot. The robot may move in any region of the target water region, for example, may move along an edge of the target water region. The first position detection unit 105 may include a position sensor and is configured to obtain a first position of the robot at a target moment at which the target obstacle is detected. Similarly, the first position detection unit 105 may also be provided at any position on the robot body 10. As shown in FIG. 2, the first position detection unit 105 may be provided inside the robot body 10. In a specific embodiment, the first position detection unit 105 includes a code disk and an inertial measurement unit. The code disk is configured to obtain a displacement of the robot per unit time. The inertial measurement unit is configured to determine an Euler angle of the robot before the robot is displaced, to determine, based on the Euler angle, sub-displacements of the displacement in a plurality of directions per unit time. The target sensor 106 is, but is not limited to, a line laser sensor, a radar sensor, a lidar, or the like, and is configured to determine position information of the target obstacle relative to the robot. The position information includes, but is not limited to, a distance and an angle. The obstacle detection unit 104 may be connected to the first position detection unit 105. When detecting the target obstacle, the obstacle detection unit 104 sends a signal to the first position detection unit 105, and the first position detection unit 105 detects the first position of the robot. Similarly, the obstacle detection unit 104 may also be connected to the target sensor 106. When detecting the target obstacle, the obstacle detection unit 104 sends a signal to the target sensor 106, and the target sensor 106 determines the position information of the target obstacle relative to the robot.

The obstacle detection unit 104, the first position detection unit 105, and the target sensor 106 may all be connected to the control unit 101. The control unit 101 can accumulate sub-displacements in the plurality of directions within N units of time to an initial position of the robot, and determine the first position of the pool robot at the target moment based on an accumulation result. N is a natural number greater than or equal to 1, and N is determined based on a difference between the target moment and an initial moment. The initial position is a position at the initial moment. The first position and the initial position are positions of the robot in a global coordinate system. The control unit 101 can further determine a position of the target obstacle relative to the robot based on the position information of the target obstacle relative to the robot, determine a second position of the target obstacle based on the relative position and the first position of the robot at the target moment, and construct or update a target map of the target water region based on the second position of the target obstacle.

In an embodiment, a depth sensor (not shown in the figure) is further provided on the robot body 10. The depth sensor may be provided at any position on the robot, and the depth sensor is configured to determine a depth of the target water region to obtain a depth of the pool robot at the target moment.

In an embodiment, that the control unit 101 constructs or updates a target map of the target water region based on the second position of the target obstacle includes: The control unit 101 marks a voxel corresponding to the second position of the target obstacle in a three-dimensional map and controls the robot to move along the edge of the target water region by one round. When it is determined that the pool robot has moved along the edge of the target water region by at least one round, map construction is completed, and the target map is obtained.

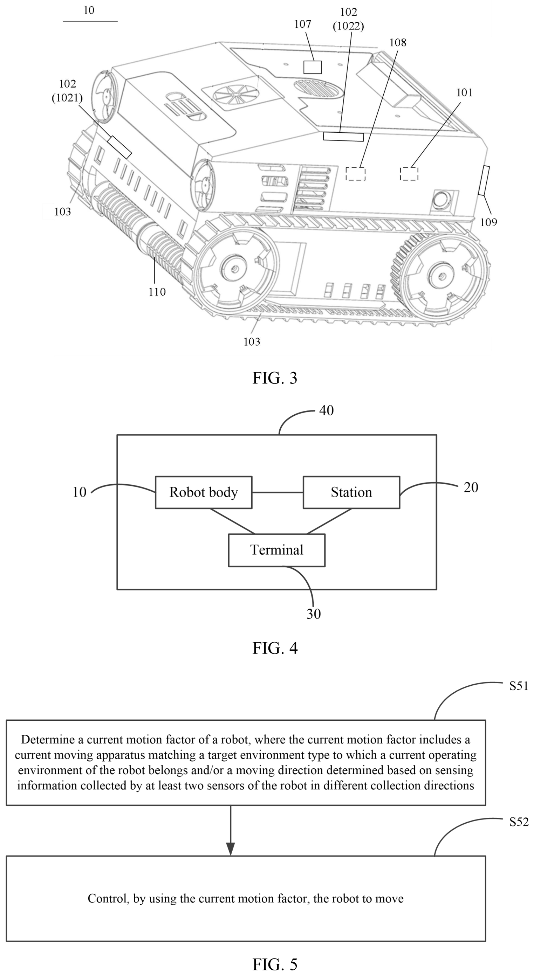

FIG. 3 is a schematic structural diagram of a third implementation of a robot according to the present disclosure. In an embodiment, in addition to the control unit 101, the distance measurement unit 102, and the moving mechanism 103, a second position detection unit 107 and an information obtaining unit 108 are further provided on the robot body 10. The second position detection unit 107 is configured to obtain a coordinate position of the robot in real time in a process in which the robot moves in a preset water region. The second position detection unit 107 may include a position sensor. The second position detection unit 107 may alternatively be provided at any position on the robot body 10. As shown in FIG. 3, the second position detection unit may be provided outside the robot body 10. The information obtaining unit 108 is configured to: when it is determined, based on the coordinate position, that the robot reaches a target water region in the preset water region, obtain target release information of a target substance, where the target release information corresponds to the target water region. The information obtaining unit 108 is provided inside the robot body 10. The control unit 101 controls, based on the target release information, the robot to release the target substance in the target water region.

In an embodiment, a target device 109 may be further provided on the robot body 10. The target device 109 may be provided on one side of the robot. In an embodiment, as shown in FIG. 3, the target device may be provided at a tail portion of the robot. The target device 109 is configured to store the target substance. The target device 109 includes, but is not limited to, a box or a bag storing the target substance. The target substance may be a cleaning substance used to clean a water region and may include, but is not limited to, a disinfectant, a clarifying agent, an algae removing agent, or the like. The cleaning substance may be a liquid reagent or a solid particle. Specifically, for example, the target substance may be sodium hypochlorite, liquid chlorine, or a nutrient solution (for example, a nutrient solution in a fish pond) that needs to be added to the water region. A water quality test device may be further provided on the robot body 10. The water quality test device can detect water quality of the target water region and may send the water quality of the target water region to the control unit 101. The control unit 101 may determine the target release information based on the water quality of the target water region.

In an embodiment, a control circuit is further provided on the robot body 10. That the control unit 101 controls, based on the target release information, the robot to release the target substance in the target water region includes: When it is determined, based on the coordinate position, that the robot reaches the target water region, the control unit 101 sends a first control instruction to the control circuit, and in response to the first control instruction by using the control circuit, the control unit 101 controls the target device to be turned on and release the target substance to the target water region based on the target release information. The first control instruction includes the target release information.

Refer to FIG. 3. In an embodiment, a cleaning unit 130 is further provided on the robot body 10. The cleaning unit 130 can clean a preset region in a moving process of the robot. The preset region is a region within a preset range of a motion path of the robot.

When the robot is a pool robot, the control unit 101 in the above embodiment may be a processor of the pool robot. For a specific execution process of the control unit 101, refer to the following method embodiment. Details are not described herein.

Refer to FIG. 4. FIG. 4 is a schematic diagram of a frame of a robot system according to an embodiment of the present disclosure.

The robot system 40 at least includes a robot body 10, a station 20, and a terminal 30. The robot body 10 is the robot body 10 provided in this application. A first communication module is provided on the robot body 10, a second communication module is provided on the station 20, and a third communication module is provided on the terminal 30. The robot body 10, the station 20, and the terminal 30 may communicate with each other. In an embodiment, the robot body 10 can directly communicate with the terminal 30, and the third communication module of the terminal 30 communicates with the first communication module of the robot body 10. For example, when both the robot body 10 and the terminal 30 are located on a water surface, the robot body 10 communicates with the terminal 30 in any communication mode in which a signal can be transmitted in air, for example, Wi-Fi or a 5G signal. The robot body 10 can also communicate with the terminal 30 via the station 20 or a relay apparatus. In an embodiment, the robot body 10 communicates with the terminal 30 via the station 20, that is, the robot body 10 first communicates with the station 20, and then the station 20 communicates with the terminal 30. The first communication module of the robot body 10 communicates with the second communication module of the station 20 in a preset communication mode. The preset communication mode includes a first communication mode and a second communication mode. The robot body 10 may select the first communication mode or the second communication mode based on a type of a current target operating environment of the robot body 10. The first communication mode is to perform communication via a radio frequency module, and the second communication mode is to perform communication via a network module. Specifically, in an embodiment, the first communication module includes a first radio frequency module and a first network module, and the second communication module includes a second radio frequency module and a second network module. The robot body 10 can determine a communication mode between the robot body 10 and the station 20 based on a type of a target environment in which the robot body 10 currently operates. If the type of the target environment is an underwater environment, the robot body 10 communicates with the station 20 via the first radio frequency module and the second radio frequency module. If the type of the target environment is a non-underwater environment, the robot body 10 communicates with the station 20 via the first network module and the second network module. The terminal 30 can send a control instruction to control the robot.

In another embodiment, the robot system further includes a relay apparatus. The relay apparatus may be at least partially located above the water surface, that is, partially located above the water surface and partially located below the water surface, or the relay apparatus may be entirely located above the water surface, and the relay apparatus extends underwater via an extension member that may conduct a signal. The extension member may be a transmission line. The robot body 10 can communicate with the terminal 30 via the relay apparatus. Specifically, the relay apparatus includes a fourth communication module. The fourth communication module communicates with the first communication module in a third communication mode, enabling the relay apparatus to communicate with the robot body 10. The fourth communication module communicates with the third communication module in a fourth communication mode, enabling the relay apparatus to communicate with the terminal 30. The third communication mode is a communication mode that supports transmission of a signal in water, for example, an ultrasonic transmission mode. The fourth communication mode is a communication mode that supports transmission of a signal in air, for example, a radio transmission mode, a green light transmission mode, an ultrasonic transmission mode, a Wi-Fi transmission mode, or a Bluetooth transmission mode. It may be understood that the robot body 10 may alternatively directly communicate with the terminal 30. For example, the terminal 30 is a wireless touch apparatus or a remote control. An example in which the terminal is a remote control is used. The remote control may directly communicate with the terminal 30 through radio transmission or green light transmission.

Refer to FIG. 5. FIG. 5 is a schematic flowchart of a first implementation of a robot control method according to the present disclosure. The method includes the following steps.

S51: Determine a current motion factor of a robot, where the current motion factor includes a current moving apparatus matching a target environment type to which a current operating environment of the robot belongs and/or a moving direction determined based on sensing information collected by at least two sensors of the robot in different collection directions.

In an embodiment, no sensors are mounted on the robot. In this case, the target environment type to which the current operating environment of the robot belongs may be first determined, and the current moving apparatus matching the target environment type may be obtained as the current motion factor. Specifically, the robot may determine the target environment type based on a position of the robot. For example, if the robot is a pool robot, the target environment type may include an underwater environment and a non-underwater environment. For another example, if the robot is a cleaning robot, the target environment type may include an indoor environment and an outdoor environment. It may be understood that the foregoing examples are merely illustrative. The present disclosure is not limited to the foregoing cases. After the robot determines the target environment type, the current moving apparatus matching the target environment type is obtained. In a specific embodiment, a propeller for water surface cleaning and/or a track wheel are/is mounted on the robot, and the robot is a pool robot. If the target environment type is the underwater environment, the track wheel is used as the current moving apparatus, or the track wheel and the propeller are used together as the current moving apparatus. If the target environment type is the non-underwater environment, the robot is at least partially exposed on a water surface, or the robot submerges and is close to the water surface, and the propeller for water surface cleaning or both the propeller for water surface cleaning and the track wheel are used as the current moving apparatus.

In another embodiment, when a sensor is mounted on the robot, for example, a distance measurement sensor, the moving direction may be determined based on sensing information collected by the sensor, and the moving direction is used as the current motion factor of the robot. An exact process of determining the moving direction is not described herein. For details, refer to the following descriptions.

In other embodiments, the sensor and the current moving apparatus are provided on the robot. In this case, either of the current moving apparatus and the moving direction determined based on the sensing information collected by the at least two sensors of the robot in different collection directions may be selected as the current motion factor, or both may be selected as the current motion factor. For example, when the current moving apparatus and the moving direction are selected as the current motion factor, the current moving apparatus may be controlled to move in the moving direction to control the robot to move.

S52: Control, by using the current motion factor, the robot to move.

In an embodiment, if the current motion factor is the current moving apparatus matching the target environment type to which the current operating environment of the robot belongs, in response to a motion control signal sent by a control apparatus, the robot is driven by the current moving apparatus to move in the current operating environment. In other words, motion of the robot is triggered by the motion control signal, and the robot is controlled, by using the current motion factor, to move. The motion control signal may indicate the moving direction of the robot. For example, the control signal indicates that the robot moves forward. Specifically, after the control apparatus sends the motion control signal, the robot can generate a drive instruction for the current moving apparatus. The drive instruction may be generated based on the current operating environment, detection data of the sensor, or an operation performed by a user on an operating component of the control apparatus. For example, the control apparatus is a remote control. The remote control includes four operating buttons indicating that the robot moves forward, backward, leftward, and rightward. When an operating button indicating that the robot moves forward is pressed, the control apparatus sends the motion control signal to the robot, and a processor of the robot may process the motion control signal to generate the drive instruction. The drive instruction is sent to the current moving apparatus to drive the robot to move in the current operating environment. In another embodiment, control of motion of the robot by using the current motion factor may alternatively not be triggered by the motion control signal. After the current motion factor is determined, the robot moves based on the current motion factor.

In the above embodiment, when the current moving apparatus is the propeller for water surface cleaning or the track wheel, one control apparatus may be used for control. For example, when the robot is in the non-underwater environment, the robot is controlled by the remote control. For example, the propeller for water surface cleaning is controlled, by using an operating button of the remote control, to move forward, move at different speeds, or move reversely, so that the robot correspondingly moves. When the robot is in the underwater environment, the track wheel is controlled, by using an operating button of the remote control, to move forward, move at different speeds, or move reversely. A corresponding operating button may be provided on the remote control, for example, buttons indicating a moving direction: moving forward, moving backward, moving leftward, and moving rightward, a button indicating selection of a moving apparatus, and a button indicating function switching. For example, the buttons indicating the moving direction may be used to control a change of a parameter of the moving apparatus, so that the robot can move in this direction. It may be understood that in other embodiments, the propeller for water surface cleaning or the track wheel may alternatively be controlled by different control apparatuses.

In another embodiment, the current motion factor includes the current moving apparatus matching the target environment type to which the current operating environment of the robot belongs and the moving direction determined based on the sensing information collected by the at least two sensors of the robot in different collection directions. In this case, the propeller for water surface cleaning or the track wheel may be controlled to move in the moving direction, so that the robot can move.

In other embodiments, the current motion factor is the moving direction determined based on the sensing information collected by the at least two sensors of the robot in different collection directions. In this case, the robot may be controlled to move in the moving direction. In this process, the robot can be driven by a drive apparatus mounted on the robot to move. The drive apparatus is not specifically limited herein and may be any apparatus capable of driving the robot to move.

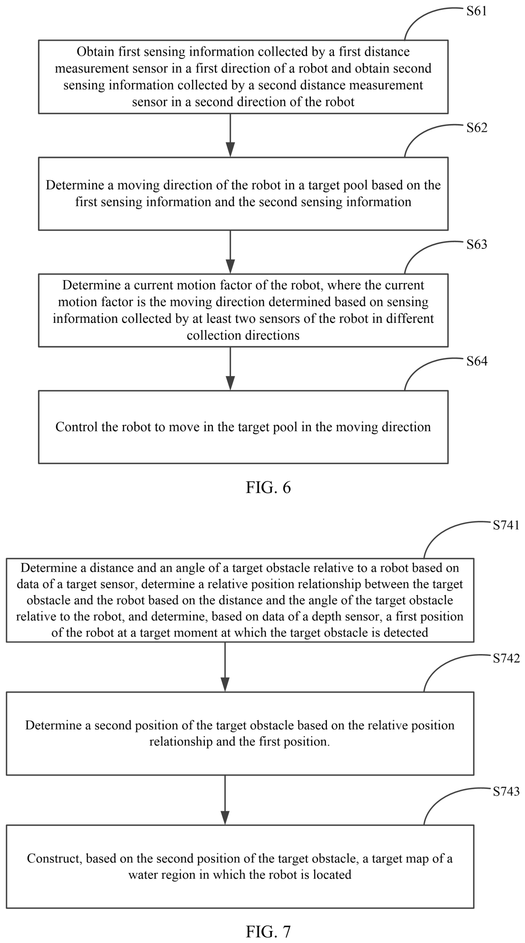

Refer to FIG. 6. FIG. 6 is a schematic flowchart of a second implementation of a robot control method according to the present disclosure. The method may be performed by a control unit of a robot body and includes the following steps.

S61: Obtain first sensing information collected by a first distance measurement sensor in a first direction of a robot and obtain second sensing information collected by a second distance measurement sensor in a second direction of the robot.

In an embodiment, the first direction is perpendicular to the second direction. The first direction may be the front, namely, a direction from a tail portion of the robot to a head portion of the robot or a forward direction of the robot. The first distance measurement sensor may be provided at a front portion of the robot. An angle difference between a right angle and an included angle between the second direction and the first direction is less than a preset angle. In an embodiment, the second direction is perpendicular to the first direction. The second direction may be a leftward direction or a rightward direction of the robot, and the second distance measurement sensor is correspondingly provided in the second direction. In a specific embodiment, the second direction is the rightward direction of the robot, and the second distance measurement sensor may be provided on a right side of the robot. Each of the first distance measurement sensor and the second distance measurement sensor may be a sensor capable of measuring a distance, for example, an ultrasonic sensor, an infrared sensor, or a TOF (Time of Flight) sensor. Each of the first distance measurement sensor and the second distance measurement sensor may be one sensor or a combination of the above sensors.

In another embodiment, a cleaning apparatus is further provided on the robot. The cleaning apparatus may be provided at any position on the robot. For example, the cleaning apparatus is provided in the second direction of the robot. An example in which the second direction is the rightward direction of the robot. In this case, both the cleaning apparatus and the second distance measurement sensor are provided on the right side of the robot. The robot may control the cleaning apparatus to clean a target pool in a moving process. For example, in the moving process of the target robot, the cleaning apparatus provided in the second direction cleans an inner wall of the target swimming pool. In a specific embodiment, the cleaning apparatus may filter water in the pool to clean the pool. A cleaning manner of the robot may be that a pumping apparatus sucks in liquid through a water inlet, debris and garbage in the liquid are filtered out by a filter, and filtered water is discharged through a water outlet. In this way, the liquid in the pool is cleaned.

S62: Determine a moving direction of the robot in the target pool based on the first sensing information and the second sensing information.

In an embodiment, the first sensing information may indicate obstacle information in the first direction of the robot. The obstacle information in the first direction may indicate a first distance between the robot and a first obstacle in the first direction. The second sensing information may indicate obstacle information in the second direction of the robot. The obstacle information in the second direction may indicate a second distance between the robot and a second obstacle in the second direction. A position of the robot relative to the obstacle may be determined based on the first sensing information and the second sensing information, and then the moving direction of the robot may be planned, so that the robot is close to or away from the obstacle. In this embodiment, the robot is used in the pool. The pool may be a swimming pool. In other embodiments, the robot may not only be used in the pool but also be used in a channel, a reservoir, a pond, and the like.

Specifically, when the first distance indicated by the first sensing information between the robot and the first obstacle in the first direction reaches a first maximum threshold, the robot is controlled to move toward a third direction. The third direction is opposite to the second direction or away from the second direction. When the second direction is the rightward direction of the robot, the third direction is the leftward direction of the robot or a direction that forms an angle greater than 90° and less than or equal to 180° with the second direction.

In an embodiment, the cleaning apparatus is provided in the rightward direction of the robot, and the cleaning apparatus cleans a wall of the target swimming pool in the moving process of the robot. The first maximum threshold may be set based on an actual situation or based on a detection range (a blind zone) of the ultrasonic sensor, for example, may be one meter. When the first distance measurement sensor detects that the distance between an obstacle (the first obstacle) in front of the robot and the robot reaches the first maximum threshold, it indicates that the front portion of the robot is close to a wall of the target pool. In this case, the robot needs to be controlled to perform steering to avoid colliding with the wall of the target pool.

When the first distance reaches the first maximum threshold, a control unit (which may be a processor of the robot) may first control the robot to reduce a moving speed and then control the robot to rotate to the third direction, which may be implemented in any of the following manners:

Manner 1: When the first distance reaches the first maximum threshold, the moving speed of the robot is reduced. When the distance between the robot and the first obstacle reaches a first minimum threshold, the moving speed of the robot is zero. The first minimum threshold is less than the first maximum threshold. When the first distance reaches the first minimum threshold, the robot is controlled to rotate to the third direction. In this embodiment, when the distance between the robot and the first obstacle in front of the robot reaches the first minimum threshold, the robot decelerates to zero and then rotates leftward in situ to the third direction. The first minimum threshold is less than the first maximum threshold. A specific value may be set based on an actual situation, for example, may be 0.4 m. The robot rotates leftward by an angle, so that the second distance measurement sensor can detect the second obstacle on the right of the robot, that is, the right side of the robot is parallel to the second obstacle. The second obstacle may be a wall of the pool on the right of the robot, and the first obstacle may be a wall of the pool in front of the target robot.

Manner 2: When the first distance reaches the first maximum threshold, the moving speed of the robot is reduced. When the first distance reaches a first minimum threshold, the moving speed of the robot is zero. The first minimum threshold is less than the first maximum threshold. When the first distance reaches the first minimum threshold, the robot is controlled to move in a fourth direction for a preset distance. The fourth direction is opposite to the first direction. When the robot moves toward the fourth direction for the preset distance, the robot is controlled to rotate to the third direction. In this embodiment, when the distance between the robot and the first obstacle in front of the robot reaches the first minimum threshold, the robot decelerates to zero, moves backward for the preset distance, that is moves in the fourth direction (the fourth direction is a backward direction of the robot) for the preset distance, and then rotates leftward in situ. The preset distance may be set based on an actual situation. The first minimum threshold may be set smaller, for example, 0.3 m or 0.2 m, so that the robot can clean a corner of the pool more thoroughly. The robot rotates leftward by an angle, so that the second distance measurement sensor can detect the second obstacle on the right of the robot, that is, the right side of the robot is parallel to the second obstacle. The second obstacle may be a wall of the pool on the right of the robot, and the first obstacle may be a wall of the pool in front of the target robot.

Manner 3: When the first distance reaches the first maximum threshold, the moving speed of the robot is reduced, and the robot is controlled to rotate toward the third direction at a preset rotation speed. When the first distance reaches a first minimum threshold, the robot rotates to the third direction. In this embodiment, when the second direction is the rightward direction of the robot, the third direction is the leftward direction of the robot. Before the distance between the robot and the first obstacle in front of the robot reaches the first minimum threshold, the robot decelerates and turns left. When the distance between the robot and the first obstacle in front of the robot reaches the first minimum threshold, the robot rotates leftward.

When the second distance is within a preset range, the robot is controlled to move in a direction parallel to the second obstacle; or when the distance between the robot and the second obstacle is within a preset range, the robot is controlled to rotate in the second direction at a preset rotation speed, and when the distance between the robot and the second obstacle reaches a second minimum threshold, the robot is controlled to move in a direction parallel to the second obstacle. The distance is indicated by the second sensing information. The second minimum threshold is less than a minimum value within the preset range. Specifically, the second obstacle is an obstacle located in the second direction of the robot and may be a wall of the pool on the right of the robot. The preset range may be set based on an actual situation. For example, a range, of a distance between the robot and the second obstacle, from 0.1 m to 0.2 m is a normal range. In this case, the robot is controlled to keep moving forward in the direction parallel to the second obstacle on the right of the robot. Alternatively, the robot may be controlled to rotate rightward by a preset angle. The preset angle may be set based on an actual situation, for example, 15° or 20°. The robot is controlled to move forward slowly to the right, so that the robot can be closer to the obstacle on the right of the robot, enabling the robot to perform cleaning more thoroughly along an edge. When the robot moves forward to the right until the distance between the robot and the second obstacle on the right of the robot reaches the second minimum threshold, the robot is adjusted to move forward in the direction parallel to the second obstacle on the right of the robot. The second minimum threshold is less than the minimum value within the preset range. For example, assuming that the preset range is from 0.1 m to 0.2 m, the second minimum threshold is less than 0.1 m, for example, may be 0.08 m, which may be set based on an actual situation.

When the second distance is not within the preset range, the moving direction of the robot is controlled based on the distance between the robot and the second obstacle. Specifically, the robot may be controlled to approach the second obstacle until the second distance reaches the second minimum threshold, and when the second distance reaches the second minimum threshold, the robot is controlled to move in the direction parallel to the second obstacle. For example, there may be the following cases. Case 1: When the second distance is less than the second minimum threshold and greater than or equal to a third minimum threshold, the moving speed of the robot is reduced, and the robot is controlled to rotate toward the third direction at the preset rotation speed, and when the second distance reaches the second minimum threshold, the robot is controlled to move in the direction parallel to the second obstacle, where the third minimum threshold is less than the second minimum threshold, and the third direction is opposite to or away from the second direction; or when the distance between the robot and the second obstacle is less than a third minimum threshold, the robot is controlled to rotate to the third direction.

The third minimum threshold is a minimum threshold of the distance between the robot and the second obstacle on the right of the robot, and the third minimum threshold is less than the second minimum threshold. Assuming that the second minimum threshold is 0.08 m, the third minimum threshold is less than 0.08 m, which may be, for example, 0.05 m. If the distance between the robot and the second obstacle on the right of the robot is less than the third minimum threshold, the robot is controlled to turn left. If the distance between the robot and the second obstacle on the right of the robot is less than the second minimum threshold and greater than or equal to the third minimum threshold (for example, may be any distance value from 0.05 m to 0.08 m), the robot is controlled to move forward to the left until the distance between the robot and the second obstacle on the right of the robot reaches the second minimum threshold (assuming that the second minimum threshold is 0.08 m). When the distance between the robot and the second obstacle on the right of the robot reaches the second minimum threshold, the robot is controlled to move in the direction parallel to the second obstacle on the right of the robot.

Case 2: When the second distance is greater than or equal to a second maximum threshold and less than or equal to a third maximum threshold, the robot is controlled to rotate in the second direction at the preset rotation speed, and when the second distance reaches the second minimum threshold, the robot is controlled to move in the direction parallel to the second obstacle; or when the second distance is greater than or equal to a second maximum threshold and less than or equal to a third maximum threshold, the robot is controlled to rotate in the second direction at the preset rotation speed, and when the second distance reaches the minimum value within the preset range, the robot is controlled to move in the direction parallel to the second obstacle; or when the distance between the robot and the second obstacle is greater than or equal to a third maximum threshold, the robot is controlled to rotate to the second direction.

The third maximum threshold is a farthest distance between the robot and the second obstacle on the right of the robot. The second maximum threshold is less than the third maximum threshold, and the second maximum threshold is greater than a maximum value within the preset range. Assuming that the preset range is from 0.1 m to 0.2 m, the second maximum threshold is greater than 0.2 m, for example, may be 0.3 m, and the third maximum threshold is greater than the second maximum threshold, for example, may be 0.4 m. When the distance between the robot and the second obstacle on the right of the robot is greater than or equal to the third maximum threshold, the robot is controlled to turn right.

When the distance between the robot and the second obstacle on the right of the robot is greater than or equal to the second maximum threshold and less than or equal to the third maximum threshold, the robot is controlled to rotate rightward at the preset rotation speed, and a preset angle may be determined based on an actual situation, for example, 10° or 15°. Then, the robot is controlled to move forward to the right until the distance between the robot and the second obstacle on the right of the robot reaches the second minimum threshold, and then the robot is controlled to move in the direction parallel to the second obstacle, or the robot is controlled to move forward to the right until the distance between the robot and the second obstacle reaches the minimum value within the preset range, and then the robot is controlled to move in the direction parallel to the second obstacle.

An example in which the first direction is the forward direction of the robot, and the second direction is the rightward direction of the robot is used. The first distance measurement sensor and the second distance measurement sensor may be ultrasonic sensors with high waterproof performance and respectively arranged on the front portion and the right side of the robot. The first distance measurement sensor on the front portion is configured to detect an obstacle in the forward direction of the robot to avoid colliding with the obstacle in front of the robot. The second distance measurement sensor on the right side is configured to detect an obstacle on the right of the robot, so that the robot keeps an appropriate distance from a wall on the right of the robot in a process of moving along an edge of the pool.

The above steps may be performed by a pool robot or the like. However, this is not limited thereto. The pool robot may move on one or more of a bottom wall, a side wall, or a water surface of the pool and perform a related task, for example, cleaning and disinfection.

S63: Determine a current motion factor of the robot, where the current motion factor is the moving direction determined based on sensing information collected by at least two sensors of the robot in different collection directions.

Step S63 may alternatively be performed before step S61. In other words, it is first determined that the current motion factor is the moving direction, and then the specific moving direction is determined. In this embodiment, the moving direction is determined based on the first sensing information collected by the first distance measurement sensor of the robot in the first direction and the second sensing information collected by the second distance measurement sensor of the robot in the second direction.

S64: Control the robot to move in the target pool in the moving direction.

For specific implementation of steps S63 and S64, refer to related descriptions of step S51 and step S52 in the first implementation of the robot control method provided in the present disclosure. Details are not described herein again.

In this embodiment, the first distance measurement sensor is provided in the first direction of the robot, the first distance measurement sensor collects the first sensing information in the first direction, the second distance measurement sensor is provided in the second direction of the robot, the second distance measurement sensor collects the second sensing information in the second direction, and the moving direction of the robot is controlled based on the first sensing information and the second sensing information, so that the robot cleans the target pool. In this way, the following case can be avoided: A distance between the robot and a wall of the pool is inappropriate, leading to incomplete cleaning of the pool. This improves a pool cleaning effect and cleaning efficiency.

In an embodiment, step S63 may not be included, and after the moving direction of the robot is obtained, step S64 is directly performed. In an embodiment, a probability grid map may be further constructed based on the first sensing information and the second sensing information collected by the first distance measurement sensor and the second distance measurement sensor, and the grid map is fused with data of an inertial measurement unit IMU, a code disk, a water depth sensor, and the like to position the robot in real time. The robot performs underwater cleaning along an edge of a wall of the pool and completes construction of a map of the entire pool simultaneously to provide a boundary reference for path planning. According to the present disclosure, an ultrasonic sensor with high waterproof performance and an intelligent full-coverage solution are used in combination, so that the cleaning efficiency and intelligence of the pool robot are significantly improved. The waterproof performance of the ultrasonic sensor is improved, so that the sensor meets a requirement of long-term underwater operation. Compared with an existing pool robot, the pool robot in the present disclosure can obtain rich information about an underwater obstacle and deal with the obstacle effectively, and the cleaning efficiency of the robot and use efficiency of a battery capacity can be improved according to an intelligent full-coverage solution of the bottom of the pool.

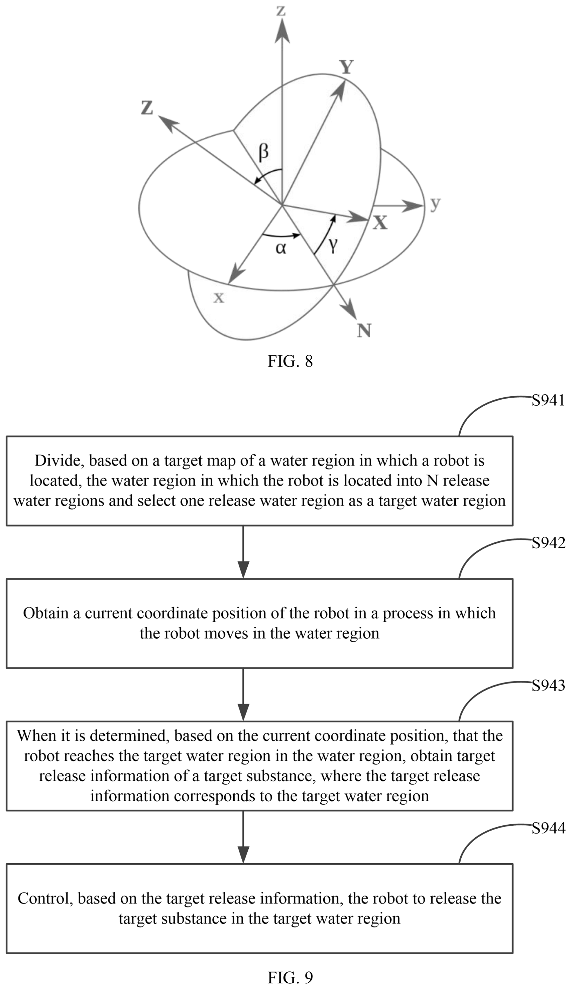

Refer to FIG. 7 and FIG. 8. FIG. 7 is a schematic flowchart of a target map constructing method according to an embodiment of the present disclosure. FIG. 8 is a schematic diagram of Euler angles according to an embodiment of the present disclosure. In an embodiment, in addition to the control unit and the moving mechanism, an obstacle detection unit, a first position detection unit, and a target sensor are further provided on the robot body. The control unit of the robot may construct, based on data of the obstacle detection unit, the first position detection unit, and the target sensor, a target map of a water region in which the robot is located. Specifically, the target map constructing method may include the following steps.

S741: Determine a distance and an angle of a target obstacle relative to the robot based on the data of the target sensor, determine a position of the target obstacle relative to the robot based on the distance and the angle of the target obstacle relative to the robot, and determine, based on data of a depth sensor, a first position of the robot at a target moment at which the target obstacle is detected.

The above steps may be performed by the control unit of the robot, a processor having data processing and signal interaction capabilities, or another processing device or processing unit having a similar processing capability. However, this is not limited thereto.

The target obstacle is any obstacle detected in a moving process of the robot. Specifically, the target obstacle may be any obstacle detected in a process in which the robot moves along an edge of the water region in which the robot is located. That the robot moves along an edge of the water region may be that the robot moves along an edge of a bottom surface of the water region or an edge of a water surface of the water region. The water region in which the robot is located is, but is not limited to, a swimming pool, an ornamental reservoir, a wild pool, or the like. The robot may be located on a water surface of the water region or a bottom of the water region, or suspended in the water region, or located on a wall of a swimming pool when the target water region is the swimming pool.

The target sensor may be an acoustic radar, a line laser emitter, a lidar, or the like. The angle may be an Euler angle or a variation of an Euler angle. The first position of the robot at the target moment may be obtained by accumulating displacements of the robot within a plurality of units of time and a variation of each Euler angle to an initial position of the robot or by accumulating projection variations of displacements of the robot within a plurality of units of time on each Euler angle to an initial position of the robot. Certainly, a position sensor may be further mounted in the water region to determine three-dimensional coordinates of the robot. Each of the first position, the second position, and the initial position has a horizontal coordinate, a vertical coordinate, and a depth coordinate in a global coordinate system, and the determined three-dimensional coordinates may be corrected by a plurality of sensors (for example, a depth sensor and a distance sensor) mounted in the water region in which the robot is located or on the robot. The first position may be a depth position.

In an embodiment, the determining a first position of the robot at a target moment at which the target obstacle is detected includes: obtaining a displacement of the robot per unit time by using a code disk provided inside the robot; determining sub-displacements of the displacement in a plurality of directions per unit time based on Euler angles of the robot before the robot is displaced, where the Euler angles are determined by using an inertial measurement unit provided inside the robot; and accumulating sub-displacements in the plurality of directions within N units of time to the initial position of the robot and determining the first position of the robot at the target moment based on an accumulation result, where N is a natural number greater than or equal to 1, and N is determined based on a difference between the target moment and an initial moment. The initial position is a position at the initial moment, and the first position and the initial position are positions of the robot in the global coordinate system. In the above embodiment, the target sensor is, but is not limited to, a line laser sensor, a radar sensor, a lidar, or the like. The target sensor is mounted inside the robot.

In an embodiment, the determining the first position of the robot at the target moment based on an accumulation result includes: determining, by using the depth sensor provided inside the robot, a depth of the robot in the water region, and calibrating, based on the depth of the robot in the water region, an accumulated target depth included in the accumulation result, to obtain the first position of the robot at the target moment. In the above embodiment, calibrating the first position includes calibrating the depth coordinate of the first position. A calibration manner may include determining a value of the depth of the robot in the water region as the depth coordinate of the first position in a case where a difference between the depth of the robot in the water region and the accumulated target depth exceeds a preset threshold, or determining an average value of the depth of the robot in the water region and the accumulated target depth as the depth coordinate of the first position in a case where a difference between the depth of the robot in the water region and the accumulated target depth exceeds a preset threshold. In a case where the difference between the depth of the robot in the water region and the accumulated target depth is less than the preset threshold, the calibration manner may include, but is not limited to, determining a value of the accumulated target depth as the depth coordinate of the first position or determining the value of the depth of the robot in the water region as the depth coordinate of the first position. The preset threshold may be two, three, or five depth units. Certainly, the above preset threshold is only an example. The preset thresholds may be determined based on a type of the water region, a size of the robot, and other factors. When the robot constructs a map on the water surface, the accumulated target depth may be 0. The accumulation result is determined based on the first position at the beginning of a previous unit time and a displacement of the robot within the previous unit time. Coordinates of the first position may be current coordinates obtained by performing accumulation based on coordinates of the robot that have been calibrated at the previous unit time. Optionally, the determining the first position of the robot at the target moment based on an accumulation result further includes: when the robot moves on the water surface of the water region, correcting the accumulated target depth based on a depth of the robot in the target water region obtained by using the depth sensor provided inside the robot. The first position is calibrated based on the depth of the robot in the water region, where the depth is determined by using the depth sensor, so that a positioning error can be systematically reduced, and positioning accuracy can be improved.

In an embodiment, the determining the position of the target obstacle relative to the robot includes: determining the distance and the angle of the target obstacle relative to the robot based on the data of the target sensor provided inside the robot; and determining a target position of the target obstacle in a coordinate system of the robot based on the distance and the angle of the target obstacle relative to the robot. The relative position includes the target position of the target obstacle in the coordinate system of the robot. In the above embodiment, the water region in which the robot is located is positioned and detected by the sensor in the process in which the robot moves in the water region, to find the target obstacle, so that the map can be comprehensively constructed. This improves operating efficiency of the robot.

S742: Determine a second position of the target obstacle based on the relative position and the first position.

In an embodiment, the determining a second position of the target obstacle based on the relative position and the first position of the robot at the target moment includes: determining a translation transformation relationship between the target position and the second position of the target obstacle based on a displacement of the robot at the first position at the target moment relative to an origin of the global coordinate system, where the relative position includes the target position of the target obstacle in the coordinate system of the robot, the target position is a position of the target obstacle in the coordinate system of the robot, and the second position is a position of the target obstacle in the global coordinate system; determining a rotation transformation relationship between the target position and the second position of the target obstacle based on Euler angles of the robot at the target moment, where the Euler angles are determined by using the inertial measurement unit provided inside the robot; and converting the target position into the second position of the target obstacle based on the rotation transformation relationship and the translation transformation relationship. In the above embodiment, the translation transformation relationship includes a translation matrix, and the rotation transformation relationship includes a rotation matrix. The second position may be obtained by cross-multiplying the target position by the translation matrix and cross-multiplying the target position by the rotation matrix. In the above embodiment, a transformation relationship between the global coordinate system and the coordinate system of the robot is determined based on pose information of the robot in the global coordinate system, and then coordinates of the target obstacle in the coordinate system of the robot are converted into coordinates in the global coordinate system, to effectively determine a three-dimensional voxel, corresponding to the target obstacle, in the map.

S743: Construct, based on the second position of the target obstacle, the target map of the water region in which the robot is located.

In an embodiment, the constructing, based on the second position of the target obstacle, the target map of the target water region includes: marking a voxel corresponding to the second position of the target obstacle in a three-dimensional map; and completing map construction and obtaining the target map when it is determined that the robot has moved along the edge of the target water region by one round. In the above embodiment, a marking manner includes determining a three-dimensional voxel, corresponding to the target obstacle, in the three-dimensional map based on a ratio of the second position of the target obstacle to a preset resolution, to mark the three-dimensional voxel. If a voxel is marked as the target obstacle, the voxel is displayed in the three-dimensional map. If a voxel is not marked as the target obstacle, the voxel is not displayed. The three-dimensional map is a global map composed of a voxel. According to the above embodiment, the three-dimensional coordinates of the target obstacle are mapped into the three-dimensional map and marked, so that the robot can quickly determine a motion path based on the marked three-dimensional map. This effectively improves the operating efficiency.

In the above embodiment, the robot detects the position of the target obstacle relative to the robot and determines the position of the pool robot by using the sensor, to determine the position of the target obstacle, and then the target map is constructed based on obtained positions of a plurality of target obstacles, so that a problem that the robot lacks map construction and positioning functions is resolved. This improves map construction efficiency of the robot.

In an example embodiment, after the target map of the target water region is constructed based on the three-dimensional coordinates of the target obstacle, the method further includes: controlling the robot to clean the target water region based on the target map. In the above embodiment, a cleaning path of the robot is planned based on the constructed map. This can effectively improve cleaning efficiency of the robot.

In an example embodiment, before the position of the target obstacle relative to the robot is obtained, the method further includes: when the robot enters the water region, obtaining distances between the robot and a plurality of edges of the water region in which the robot is located; determining a target edge based on the distances, where the target edge is an edge, closest to the robot, in the plurality of edges; and controlling the robot to move to the target edge and then move along the edges of the water region in which the robot is located from the target edge. In the above embodiment, a method for determining the distances between the robot and the edges includes, but is not limited to, directly measuring the distances by using a sensor (for example, determining the distances between the robot and the edges by using a laser sensor, a radar, and the like), determining the distances by using a photographing device or a pose sensor of the robot, and the like. The distances between the robot and the plurality of edges are determined, to determine the target edge and control the robot to move to the target edge. This can shorten map construction time of the robot and effectively improve the overall map construction efficiency.

The following further describes map construction of the robot with reference to a specific embodiment. An example in which the robot is a pool robot, and the robot constructs the map by using an ultrasonic sensor and a depth sensor is used to describe the specific embodiment. A target map construction process in this embodiment includes the following steps.

Step 1: The pool robot starts to construct a map.

Step 2: The pool robot enters the water region and starts to move along an edge of the water region.

Step 3: The pool robot determines whether the pool robot has moved along the edge of the water region by one round, and if the pool robot has moved along the edge of the water region by one round, step 9 is performed. Otherwise, step 4 is performed.

Step 4: The pool robot obtains a variation of an angle of the pool robot in the moving process by using the inertial measurement unit, obtains a variation of a displacement of the pool robot based on data of the code disk, and then calculates current three-dimensional coordinates of the pool robot based on initial three-dimensional coordinates of the pool robot.

Step 5: The pool robot obtains the depth of the robot in the water region by using the depth sensor, and corrects the accumulated target depth in the current three-dimensional coordinates based on the depth of the robot in the water region.

Step 6: The pool robot obtains target coordinates of the obstacle by using the ultrasonic sensor, where the target coordinates of the obstacle are coordinates of the obstacle in the coordinate system of the pool robot.

Step 7: The pool robot determines a transformation relationship between the target coordinates of the target obstacle and three-dimensional coordinates of the target obstacle based on current Euler angles and the current three-dimensional coordinates of the pool robot, and obtains the three-dimensional coordinates of the target obstacle based on the transformation relationship, where the three-dimensional coordinates of the target obstacle are the coordinates of the target obstacle in the global coordinate system.

Step 8: The pool robot marks a three-dimensional voxel, corresponding to the three-dimensional coordinates of the target obstacle, in the three-dimensional map, and step 2 is repeated.

Step 9: The pool robot completes a map construction task, and the target map is generated.

Step 10: Map construction is completed.

Based on the foregoing descriptions of the implementations, a person skilled in the art may clearly understand that the method in the above embodiment may be implemented by software in addition to a necessary universal hardware platform or by hardware only. In many cases, the former is a preferred implementation. Based on such understanding, the technical solutions of the present disclosure can be essentially or the part that contributes to the conventional technology can be embodied in a form of a software product. This computer software product is stored in a storage medium (for example, a ROM/RAM, a magnetic disk, or a compact disc), and includes several instructions for instructing a terminal device (which may be a mobile phone, a computer, a server, or a network device) to perform the method described in embodiments of the present disclosure.

Refer to FIG. 9. FIG. 9 is a schematic flowchart of a method for controlling a pool robot to release a target substance in a target water region according to an embodiment of the present disclosure. In an embodiment, in addition to the control unit and the moving mechanism, a second position detection unit and an information obtaining unit are further provided on the robot body. The control unit of the robot may determine, based on data of the second position detection unit and the information obtaining unit, target release information, of the target substance, corresponding to the target water region, and control the robot to release the target substance in the target water region to clean and disinfect the target pool. It may be understood that a step of controlling, by the control unit, the robot to release the target substance in the target water region may be performed after the step of constructing a target map, or a step of releasing the target substance may be performed separately based on a control instruction. Specifically, the controlling the pool robot to release the target substance in the target water region may include the following steps.

S941: Divide, based on the target map of the water region in which the robot is located, the water region in which the robot is located into N release water regions and select one release water region as the target water region.

In an embodiment, the water region in which the robot is located may be any water region, for example, may be a swimming pool or a pool.

In an embodiment, a quantity N of release water regions may be obtained based on a quantity N of release times. The quantity of release water regions may be the same as the quantity of release times. The quantity of release times is obtained based on release information. Specifically, information of the water region in which the robot is located is determined. The information of the water region includes water quality of the water region in which the robot is located and/or an amount of water in the water region in which the robot is located. The release information of the target substance to be released to the water region in which the robot is located is determined based on the information of the water region. The release information includes at least one of the following: a total quantity of target substances released to the water region in which the robot is located, a type of the target substance, a rate of releasing the target substance to the water region in which the robot is located, a duration of releasing the target substance to the water region in which the robot is located, or a quantity of times the target substance is released to the water region in which the robot is located. The quantity N of release times is calculated based on the release information, where N is a natural number greater than or equal to 1. The quantity of release times is used to determine the quantity of release water regions.

In this embodiment, the amount of water in the water region in which the robot is located may be calculated by multiplying a bottom surface of the water region in which the robot is located by a depth of the robot in the water region. A value of N may be set flexibly based on an actual application scenario or a water region division requirement. The water quality of the water region in which the robot is located may be tested by a water quality test device. In this embodiment, the water region is divided into a plurality of small release water regions, and the target substance is released in each small water region, so that the target substance can be evenly and quickly released to the water region.

In an embodiment, the dividing the water region in which the robot is located into N release water regions includes: determining a map of the water region in which the robot is located, where the map of the water region includes a map of the bottom surface of the water region in which the robot is located and the depth of the robot in the water region, and averagely dividing the water region in which the robot is located into the N release water regions based on the map of the bottom surface and the depth; or determining a three-dimensional map of the water region in which the robot is located, and averagely dividing the water region in which the robot is located into N three-dimensional water regions based on the three-dimensional map. In this embodiment, the map of the water region in which the robot is located may be pre-drawn or may be drawn by the pool robot in a cleaning process. For example, the map of the water region in which the robot is located may be the target map of the water region in which the robot is located, where the target map is constructed in the above map constructing method.

S942: Obtain a current coordinate position of the robot in a process in which the robot moves in the water region.

In an embodiment, a position of the robot may be obtained by using the second position detection unit mounted on the robot, may be obtained based on an initial position and a moving distance of the robot, or may be obtained in any existing position obtaining method.

S943: When it is determined, based on the current coordinate position, that the robot reaches the target water region in the water region, obtain the target release information of the target substance, where the target release information corresponds to the target water region.

The target release information, of the target substance, corresponding to the target water region may be obtained by the information obtaining unit on the robot body. The target release information includes at least one of the following: a total quantity of target substances released to the target water region, a type of the target substance, a rate of releasing the target substance to the target water region, a duration of releasing the target substance to the target water region, or a quantity of times the target substance is released to the target water region.

S944: Control, based on the target release information, the robot to release the target substance in the target water region.

In an embodiment, the controlling, based on the target release information, the robot to release the target substance in the target water region includes: sending a first control instruction to a control circuit when it is determined, based on the coordinate position, that the robot reaches the target water region, where the control circuit is connected to the robot via signals and mounted on the robot body, a target device is provided on the robot body and configured to store the target substance, and the first control instruction includes the target release information; and controlling, in response to the first control instruction by using the control circuit, the target device to be turned on and release the target substance to the target water region based on the target release information. In this embodiment, the target substance is controlled, based on the control instruction, to be released, so that release time of the target substance can be accurately controlled.

In an embodiment, the sending a first control instruction to a control circuit when it is determined, based on the coordinate position, that the robot reaches the target water region includes: sending the first control instruction to the control circuit when at least one of the following is met: Coordinates of the robot indicate that the robot is located at a preset position in the target water region, the robot reaches the target water region for the first time within a preset time period, or the robot reaches the target water region for the first time in a process of performing a current task in the water region in which the robot is located. In this embodiment, the preset position may be any position in the target water region, for example, a center position of the target water region or a position at a boundary line. Because the target substance does not need to be released to some water regions at any time, a time period for releasing the target substance may be set. For example, if a cleaner is spread once a day in a swimming pool, the target device is turned on and starts to release the target substance when the robot reaches the target water region for the first time or reaches the center position of the target water region in one day, and after release of the target substance is completed, the target device is turned off. In this embodiment, the time period for releasing the target substance is set, and a position at which the target substance is released is set, so that the target substance can be accurately released.

In an embodiment, the controlling, in response to the first control instruction by using the control circuit, the target device to be turned on and release the target substance to the target water region based on the target release information includes: in response to the first control instruction by using the control circuit, controlling a target switch to be turned on, enabling the target device to be turned on and release the target substance to the target water region based on the target release information, where the target switch is provided at an outlet of the target device and configured to control the outlet of the target device to be opened and closed; when duration for which the target switch is turned on meets the target release information, or the water quality of the target water region meets preset water quality, sending a second control instruction to the control circuit; and in response to the second control instruction by using the control circuit, controlling the target switch to be turned off, enabling the outlet of the target device to be closed. In this embodiment, the target switch is connected to the control circuit and is controlled by the control circuit to be turned on and turned off, so that the target substance can be accurately controlled to be released.

In a specific embodiment, the robot is a pool robot, and the water region in which the robot is located is a swimming pool. In this case, coordinate points of the pool robot are collected in real time in a process in which the pool robot cleans the swimming pool. When the pool robot cleans the target water region, the first control instruction is sent to the control circuit, and the control circuit controls the target device to be turned on and continuously release the target substance in the moving process of the pool robot until a dose of the target substance corresponding to the target release information has been released. When the dose of the target substance corresponding to the target release information has been released, the control circuit controls the target device to be turned off. Then, the pool robot moves to a next water region to release the target substance for a certain time period. The total quantity of target substances, the type of the target substance, the rate of releasing the target substance to the target water region, and the duration for which the target substance is released to the target water region may all be preset or calculated based on the total amount of water in the preset water region. A quantity of released target substances corresponding to duration for which the target device is turned on may also be preset. The target device may be a reagent kit or a device in a bag form.

The target substance may be a cleaning substance used to clean the water region and may include, but is not limited to, a disinfectant, a clarifying agent, an algae removing agent, or the like. The cleaning substance may be a liquid reagent or a solid particle. Specifically, for example, the target substance may be sodium hypochlorite, liquid chlorine, or a nutrient solution (for example, a nutrient solution in a fish pond) that needs to be added to the water region.

In this embodiment, steps may be performed by the control unit of the robot or another processor having a processing capability. In the above manner, the pool robot may release the target substance based on the target release information after reaching the target water region, so that the target substance can be quickly and accurately released in the target water region. Therefore, a problem of low accuracy of spreading the target substance in the water region can be resolved, and the target substance can be quickly and accurately released in the water region.

In an embodiment, a step of controlling the pool robot to release the target substance in the target water region may further include: controlling the robot to release the target substance at any of the following positions in the target water region: the bottom of the target water region, a wall of the target water region, and a water surface of the target water region. In this embodiment, the robot may move on the bottom of the target water region, move along the wall of the target water region, or float on the water surface. In addition, the robot may further have many functions, for example, a cleaning function and a disinfection function. For example, while cleaning the water region, the robot may release the target substance to disinfect the water region, so that the target substance is evenly and efficiently released to the water region. This reduces maintenance time of the water region.

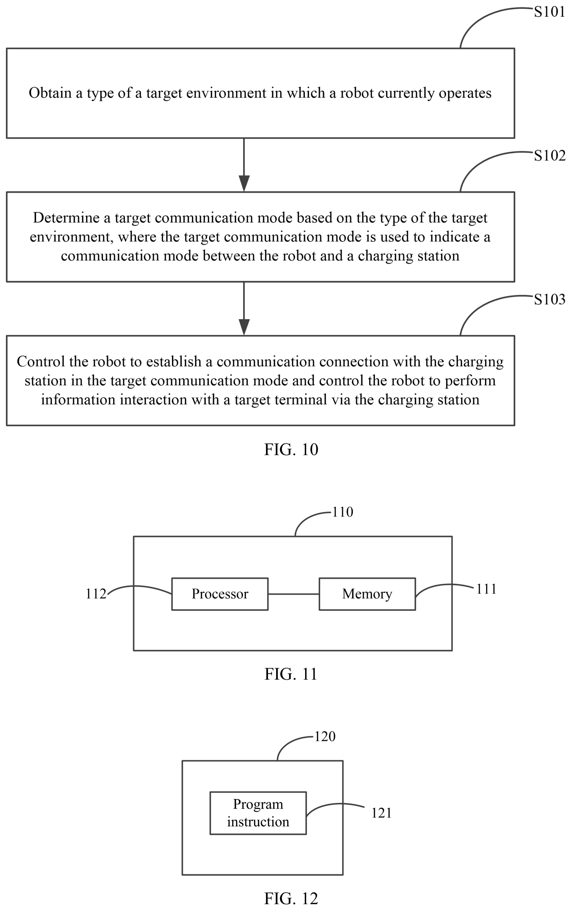

In the present disclosure, the robot can interact with a terminal and a station in the moving process. The station includes a charging station. Therefore, the present disclosure further provides a robot control method to control the robot to interact with the charging station and the terminal. Refer to FIG. 10. FIG. 10 is a schematic flowchart of a third implementation of a robot control method according to the present disclosure. The method includes the following steps.

S101: Obtain a type of a target environment in which a robot currently operates.

S102: Determine a target communication mode based on the type of the target environment, where the target communication mode is used to indicate a communication mode between the robot and a charging station.

In an embodiment, the robot may further communicate with the charging station and thus perform information interaction with a target terminal via the charging station. The type of the target environment includes an underwater environment and a non-underwater environment. An example in which the robot is a pool robot is used. A possible operating environment of the pool robot includes an underwater environment and a non-underwater environment. The non-underwater environment may be a scenario in which the pool robot operates on a poolside, or a scenario in which the pool robot operates on a water surface of the pool. For example, the pool robot floats on the water surface, and the pool robot may be completely or partially located on the water surface.

After the type of the target environment in which the robot currently operates is obtained, the target communication mode is determined based on the type of the target environment. The target communication mode is a communication mode between the robot and the charging station. For example, when the type of the target environment in which the robot (for example, the pool robot) currently operates is the non-underwater environment, the target communication mode may be determined as a second communication mode, for example, a Wi-Fi network or mobile data, such as a 4G or 5G communication mode. When the type of the target environment in which the robot currently operates is the underwater environment, the target communication mode may be determined as a first communication mode, for example, a radio frequency network or acoustic wave communication, such as use of a 433 radio frequency module or a 915 radio frequency module. Because the radio frequency module has a strong capability to penetrate water relative to the Wi-Fi network, the radio frequency module has a radio signal connection capability in water. Then, the robot is controlled to establish a communication connection with the charging station in the target communication mode, and the robot is controlled to perform information interaction with the target terminal via the charging station. For example, when the robot operates in the non-underwater environment, the robot may establish a communication connection with the charging station via the Wi-Fi network and then perform information interaction with the target terminal via the charging station, or the charging station and the robot may interact with the target terminal separately and directly, and the charging station may interact with the robot directly. When the robot operates in the underwater environment, the robot may establish a communication connection with the charging station via the radio frequency network (for example, the 433 radio frequency module or the 915 radio frequency module), and then perform information interaction with the target terminal via the charging station, to ensure that the robot can establish the stable communication connection with the charging station during operation, so that the robot can maintain information interaction with the target terminal. The target terminal may be a mobile terminal, for example, a mobile phone, a tablet computer, or a PC, or another terminal, for example, a controller or a remote control. According to this embodiment, flexible communication modes are used, so that the stable communication connection can be established between the robot and the charging station, and the robot can maintain communication with the target terminal in real time. This avoids a problem in a related technology that a communication mode of the robot is single, easily causing interruption or failure of the communication connection. Therefore, a technical problem in the related technology that a communication mode of the robot is single, leading to low information interaction efficiency is resolved. This improves the information interaction efficiency.

In a specific embodiment, the determining a target communication mode based on the type of the target environment includes one of the following: determining the target communication mode as the first communication mode when the type of the target environment is the underwater environment, where the first communication mode indicates that the robot communicates with the charging station via a target radio frequency module; and determining the target communication mode as the second communication mode when the type of the target environment is the non-underwater environment, where the second communication mode indicates that the robot communicates with the charging station via a target network module.

S103: Control the robot to establish a communication connection with the charging station in the target communication mode and control the robot to perform information interaction with the target terminal via the charging station.

In an embodiment, when the target communication mode is the first communication mode, the controlling the robot to perform information interaction with the target terminal via the charging station includes: determining a current communication bit error rate between the robot and the charging station; notifying, based on the current communication bit error rate, the charging station to adjust a communication rate level, and controlling the robot to perform information interaction with the target terminal via the charging station. The robot communicates with the charging station at a communication rate corresponding to an adjusted communication rate level.

In the above embodiment, when the robot operates in the underwater environment, the robot is controlled to establish a communication connection with the charging station in the first communication mode. In this case, the current communication bit error rate between the robot and the charging station may be determined, that is, a probability of an error in data transmission within a specified time period may be determined. For example, bit error rate = bit error in transmission/total quantity of bits in transmission * 100%. Then, the charging station may be notified, based on the current communication bit error rate, to adjust the communication rate level, that is, adjust an over-the-air baud rate in real time. For example, when the bit error rate is high, the charging station may be notified to reduce the communication rate level, and when the bit error rate is low, the charging station may be notified to appropriately increase the communication rate level, that is, a communication rate between the robot and the charging station is adjusted, so that the robot can communicate with the charging station at the communication rate corresponding to the adjusted communication rate level. In this way, the robot is controlled to perform information interaction with the target terminal via the charging station. According to this embodiment, the over-the-air baud rate is adjusted in time based on the operating environment of the robot and current communication quality, so that utilization of a broadband is maximized.

In an embodiment, the notifying, based on the current communication bit error rate, the charging station to adjust a communication rate level includes: if the current communication bit error rate is greater than a first preset threshold, notifying the charging station to reduce the communication rate level; and if the current communication bit error rate is less than a second preset threshold, notifying the charging station to increase the communication rate level. The second preset threshold is less than the first preset threshold.

In the above embodiment, when the current communication bit error rate is greater than the first preset threshold (for example, 10%, 20%, or another value), the charging station may be notified to reduce the communication rate level, and when the current communication bit error rate is less than the second preset threshold (for example, 5%, 3%, or another value), the charging station may be notified to increase the communication rate level. For example, when the current communication bit error rate is greater than 10%, the robot may notify the charging station to reduce the communication rate by one level, meaning a one-level reduction based on the current communication rate, and when the current communication bit error rate is greater than 30% (or another value), the robot may notify the charging station to reduce the communication rate by two levels, meaning a two-level reduction based on the current communication rate. In actual application, several fixed communication rate levels may be preset. For example, when the current communication bit error rate is less than 3%, the robot may notify the charging station to increase the communication rate by one level, meaning a one-level increase based on the current communication rate. According to this embodiment, the communication rate can be adjusted in time based on the current communication bit error rate.

In an embodiment, the notifying, when the current communication bit error rate is greater than the first preset threshold, the charging station to reduce the communication rate level includes: when the current communication bit error rate is greater than a first bit error rate threshold, notifying the charging station to reduce the communication rate by one level, and when the current communication bit error rate is greater than a second bit error rate threshold, notifying the charging station to reduce the communication rate by two levels. The first preset threshold includes the first bit error rate threshold and the second bit error rate threshold. The second bit error rate threshold is greater than the first bit error rate threshold.

In the above embodiment, the first bit error rate threshold may be 10% (or another value). When the current communication bit error rate is greater than 10%, the robot may notify the charging station to reduce the communication rate by one level, meaning a one-level reduction based on the current communication rate. The second bit error rate threshold may be 30% (or another value). When the current communication bit error rate is greater than 30%, the robot may notify the charging station to reduce the communication rate by two levels, meaning a two-level reduction based on the current communication rate. The first bit error rate threshold and the second bit error rate threshold in this embodiment may be set or adjusted based on an actual requirement. According to this embodiment, the over-the-air baud rate is adjusted based on the current communication bit error rate, so that utilization of a broadband is maximized.

In an embodiment, the controlling the robot to perform information interaction with the target terminal via the charging station includes: after the charging station is notified, based on the current communication bit error rate, to adjust the communication rate level, if the adjusted communication rate level is less than or equal to a preset level, controlling the robot to perform instruction interaction with the target terminal via the charging station; and after the charging station is notified, based on the current communication bit error rate, to adjust the communication rate level, if the adjusted communication rate level is greater than the preset level, controlling the robot to perform instruction and/or data interaction with the target terminal via the charging station.

In the above embodiment, after the communication rate level is adjusted, if the adjusted communication rate level is less than or equal to the preset level, the robot performs instruction interaction with the target terminal via the charging station. The robot communicates with the charging station at the communication rate corresponding to the adjusted communication rate level, that is, when the communication rate level is less than the preset level, it is inappropriate to transmit data between the robot and the charging station. For example, the communication rate corresponding to the preset level is 100 kb/s (or 90 kb/s or another value). Optionally, in this case, the robot and the charging station may be prompted that it is inappropriate to transmit data (for example, map information) when the communication rate is low. After the communication rate level is adjusted, if the adjusted communication rate level is greater than the preset level, the robot performs instruction or data interaction with the target terminal via the charging station. The robot communicates with the charging station at the communication rate corresponding to the adjusted communication rate level, that is, when the communication rate level is greater than the preset level, an instruction and/or data may be transmitted between the robot and the charging station. Optionally, in this case, the robot and the charging station may be prompted that normal communication is performed. An example in which the robot is a pool robot is used. The pool robot may forward map data of the pool to the target terminal via the charging station. In actual application, the pool robot may obtain geographic data information of the operating pool and position information of the pool robot via a sensor (for example, an ultrasonic sensor or a radar sensor) provided on the pool robot and a water pressure sensor or an automatic identification module, to construct the map data of the pool, and then forward the map data of the pool and the position information of the pool robot to the target terminal via the charging station.

In another embodiment, the robot, the charging station, and the target terminal may alternatively interact with each other in the following manner: when a connection request of the robot is received, controlling the charging station to establish a communication connection with the robot, where the connection request is used to request that the communication connection is established between the robot and the charging station in a target communication mode, the target communication mode is a communication mode determined by the robot based on a type of a target environment in which the robot currently operates, and the type of the target environment includes an underwater environment and a non-underwater environment; receiving, in the target communication mode, first target information transmitted by the robot and forwarding the first target information to the target terminal; and receiving second target information transmitted by the target terminal and forwarding the second target information to the robot in the target communication mode.

According to the above steps, when the connection request of the robot used to request that the communication connection is established between the robot and the charging station in the target communication mode is received, the charging station is controlled to establish the communication connection with the robot. The target communication mode is a communication mode determined by the robot based on the type of the target environment in which the robot currently operates. The type of the target environment includes the underwater environment and the non-underwater environment. Then, the first target information transmitted by the robot is received in the target communication mode, and the first target information is forwarded to the target terminal; and the second target information transmitted by the target terminal is received, and the second target information is forwarded to the robot in the target communication mode. In other words, the robot determines the target communication mode based on the type of the target environment in which the robot currently operates, and the communication connection is established between the robot and the charging station in the target communication mode; and then the first target information transmitted by the robot is received in the target communication mode and forwarded to the target terminal, and the received second target information transmitted by the target terminal is forwarded to the robot. In this way, it can be ensured that the robot can perform information interaction with the target terminal in different types of target environments. This avoids a problem in a related technology that a communication mode of the robot is single, easily causing interruption or failure of the communication connection. Therefore, a technical problem in the related technology that a communication mode of the robot is single, leading to low information interaction efficiency is resolved. This improves the information interaction efficiency.

The above steps may be performed by a controller, a communication device, or a terminal, for example, the charging station, a controller of the charging station, a processor having a human-computer interaction capability and provided on a storage device, or another processing device or processing unit having a similar processing capability. However, this is not limited thereto.

In the above embodiment, the charging station receives the connection request of the robot. The connection request is used to request that the communication connection is established between the robot and the charging station in the target communication mode. The target communication mode is a communication mode determined by the robot based on the type of the target environment in which the robot currently operates. An example in which the robot is a pool robot is used. Possible operating environments of the pool robot include an underwater environment and a non-underwater environment. For example, when the type of the target environment in which the robot (for example, the pool robot) currently operates is the non-underwater environment, the target communication mode may be implemented via a Wi-Fi network or mobile data, such as a 4G or 5G communication mode. When the type of the target environment in which the robot currently operates is the underwater environment, the target communication mode may be implemented via a radio frequency network, such as a 433 radio frequency module or a 915 radio frequency module. Because the radio frequency module has a strong capability to penetrate water relative to the Wi-Fi network, the radio frequency module has a radio signal connection capability in water. When the charging station receives the connection request, the charging station is controlled to establish the communication connection with the robot, receives, in the target communication mode, the first target information transmitted by the robot and forwards the first target information to the target terminal, and forwards, to the robot, the received second target information transmitted by the target terminal. For example, when the robot operates in the non-underwater environment, the first target information transmitted by the robot may be received via the Wi-Fi network and forwarded to the target terminal, and when receiving the second target information transmitted by the target terminal, the charging station may also forward the received second target information to the robot via the Wi-Fi network. In this way, the robot can perform information interaction with the target terminal. When the robot operates in the underwater environment, the first target information transmitted by the robot may be received via the radio frequency network (for example, the 433 radio frequency module or the 915 radio frequency module) and forwarded to the target terminal, and when receiving the second target information transmitted by the target terminal, the charging station may also forward the received second target information to the robot via the radio frequency network (for example, the 433 radio frequency module or the 915 radio frequency module). In this way, it can be ensured that the robot can perform information interaction with the target terminal in different types of target environments. According to this embodiment, flexible communication modes are used, so that the stable communication connection can be established between the robot and the charging station, and the robot can maintain communication with the target terminal in real time. This avoids a problem in a related technology that a communication mode of the robot is single, easily causing interruption or failure of the communication connection. Therefore, a technical problem in the related technology that a communication mode of the robot is single, leading to low information interaction efficiency is resolved. This improves the information interaction efficiency.

In an optional embodiment, the receiving, in the target communication mode, first target information transmitted by the robot and forwarding the first target information to the target terminal includes: receiving a target notification sent by the robot, where the target notification is sent by the robot after a current communication bit error rate between the robot and the charging station is determined; and adjusting a communication rate level based on the target notification, receiving the first target information at a communication rate corresponding to an adjusted communication rate level, and forwarding the first target information to the target terminal.

In the above embodiment, the robot may send the target notification to the charging station based on the current communication bit error rate between the robot and the charging station. For example, a probability of an error in data transmission within a specified time period may be determined. For example, bit error rate = bit error in transmission/total quantity of bits in transmission * 100%. Then, the charging station may be notified, based on the current communication bit error rate, to adjust the communication rate level, that is, adjust an over-the-air baud rate in real time. For example, when the bit error rate is high, the charging station may be notified to reduce the communication rate level, and when the bit error rate is low, the charging station may be notified to appropriately increase the communication rate level, so that the charging station can adjust the communication rate level based on the target notification, receive the first target information at the communication rate corresponding to the adjusted communication rate level, and forward the first target information to the target terminal. In this way, the robot can perform information interaction with the target terminal via the charging station.

In an optional embodiment, the adjusting a communication rate level based on the target notification includes: reducing the communication rate level if the target notification indicates that the current communication bit error rate is greater than the first preset threshold; and, increasing the communication rate level if the target notification indicates that the current communication bit error rate is less than the second preset threshold. The second preset threshold is less than the first preset threshold.

In the above embodiment, if the target notification indicates that the current communication bit error rate is greater than a first preset threshold (for example, 10%, 20%, or another value), the charging station may reduce the communication rate level, and if the target notification indicates that the current communication bit error rate is less than a second preset threshold (for example, 5%, 3%, or another value), the charging station may increase the communication rate level. For example, when the current communication bit error rate is greater than 10%, the charging station may reduce the communication rate by one level, meaning a one-level reduction based on the current communication rate, and when the current communication bit error rate is greater than 30% (or another value), the charging station may reduce the communication rate by two levels, meaning a two-level reduction based on the current communication rate. In actual application, several fixed communication rate levels may be preset. For example, when the current communication bit error rate is less than 3%, the charging station may increase the communication rate by one level, meaning a one-level increase based on the current communication rate. According to this embodiment, the communication rate can be adjusted in time based on the current communication bit error rate.

In an optional embodiment, the reducing the communication rate level if the target notification indicates that the current communication bit error rate is greater than a first preset threshold includes: if the target notification indicates that the current communication bit error rate is greater than a first bit error rate threshold, reducing the communication rate by one level, and if the target notification indicates that the current communication bit error rate is greater than a second bit error rate threshold, reducing the communication rate by two levels. The first preset threshold includes the first bit error rate threshold and the second bit error rate threshold. The second bit error rate threshold is greater than the first bit error rate threshold.

In the above embodiment, the first bit error rate threshold may be 10% (or another value). If the target notification indicates that the current communication bit error rate is greater than 10%, the charging station may reduce the communication rate by one level, meaning a one-level reduction based on the current communication rate. The second bit error rate threshold may be 30% (or another value). If the target notification indicates that the current communication bit error rate is greater than 30%, the charging station may reduce the communication rate by two levels, meaning a two-level reduction based on the current communication rate. The first bit error rate threshold and the second bit error rate threshold in this embodiment may be set or adjusted based on an actual requirement. According to this embodiment, the over-the-air baud rate is adjusted based on the current communication bit error rate, so that utilization of a broadband is maximized.

Refer to FIG. 11. FIG. 11 is a schematic diagram of a frame structure of a robot according to an embodiment of the present disclosure.

The robot 110 includes a memory 111 and a processor 112. The memory 111 stores program instructions. The processor 112 is configured to execute the program instructions stored in the memory 111 to implement the steps in any of the above method embodiments. In one specific implementation scenario, the robot 110 may include a microcomputer and a server. This is not limited herein.

Specifically, the processor 112 is configured to control itself and the memory 111 to implement the steps in any of the above method embodiments. The processor 112 may also be referred to as a central processing unit (Central Processing Unit, CPU). The processor 112 may be an integrated circuit chip and has a signal processing capability. The processor 112 may alternatively be a general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate, a transistor logic device, or a discrete hardware component. The general-purpose processor may be a microprocessor, or the processor may be any conventional processor or the like. In addition, the processor 112 may be implemented by an integrated circuit chip.

Refer to FIG. 12. FIG. 12 is a schematic diagram of a frame of a computer-readable storage medium according to an embodiment of the present disclosure.

The computer-readable storage medium 120 stores program instructions 121. When the program instructions 121 are executed by a processor, the steps in any of the above method embodiments are implemented.

The computer-readable storage medium 120 may be specifically any medium that can store a computer program, such as a USB flash drive, a removable hard disk, a read-only memory (ROM, Read-Only Memory), a random access memory (RAM, Random Access Memory), a magnetic disk, or an optical disc, or may be a server storing the computer program. The server may send the stored computer program to another device to run the computer program, or the server may run the stored computer program.

If the technical solutions of the present disclosure involve personal information, before the product to which the technical solutions of the present disclosure are applied processes the personal information, an individual has been clearly informed of a personal information handling rule, and the individual has autonomously consented. If the technical solutions of the present disclosure involve sensitive personal information, before the product to which the technical solutions of the present disclosure are applied processes the sensitive personal information, the individual has separately consented, and a requirement of "express consent" is also met. For example, at a personal information collection apparatus such as a camera, a clear and conspicuous sign is set to inform that an individual has entered a personal information collection scope, personal information is to be collected, and if the individual voluntarily enters the collection scope, it indicates that the individual agrees about collection of his/her personal information; or in a case where the personal information processing rule is informed by using an obvious sign/information at a personal information processing apparatus, individual authorization is obtained by using pop-up information, asking the individual to upload his/her personal information by himself/herself, or the like. The personal information processing rule may include information, for example, a personal information processor, a personal information processing purpose, a processing manner, and types of processed personal information.

The above description describes only implementations of the present disclosure and is not intended to limit the scope of the present disclosure. Any equivalent structure or equivalent process transformation performed based on the contents of this specification and the accompanying drawings of the present disclosure or applied directly or indirectly in other related technical fields shall fall within the protection scope of the present disclosure.

## Claims

1. A robot, comprising: a robot body, wherein
the robot body at least comprises a control unit, a distance measurement unit, and a moving mechanism provided on the robot body, wherein
the distance measurement unit is connected to the control unit and configured to detect a distance between the robot and an obstacle; and
the moving mechanism is connected to the control unit and configured to drive the robot to move, wherein
the moving mechanism at least comprises a first moving mechanism, and the first moving mechanism is configured to drive the robot to move in a first operating environment;
the distance measurement unit at least comprises a first distance measurement sensor and a second distance measurement sensor provided on different surfaces of the robot, wherein the first distance measurement sensor is configured to detect obstacle information in a first direction, and the second distance measurement sensor is configured to detect obstacle information in a second direction; and
the control unit controls, based on the obstacle information in the first direction and the obstacle information in the second direction, the moving mechanism to move in the first operating environment.

2. The robot according to claim 1, wherein the first operating environment is an underwater environment or a water surface.

3. The robot according to claim 1, wherein the moving mechanism further comprises a second moving mechanism, wherein the second moving mechanism is configured to control the robot to move in a second operating environment, and the control unit is capable of selecting the first moving mechanism and/or the second moving mechanism based on a current environment in which the robot is located.

4. The robot according to claim 3, wherein the first operating environment is an underwater environment, and the second operating environment is a non-underwater environment, wherein the first moving mechanism is a track wheel, and the second moving mechanism is a propeller for water surface cleaning.

5. The robot according to claim 1, wherein the first direction is a forward direction of the robot, and an angle difference between a right angle and an included angle between the second direction and the first direction is less than a preset angle.

6. The robot according to claim 1, wherein the obstacle information in the first direction indicates a first distance between the robot and a first obstacle in the first direction, wherein
that the control unit controls, based on the obstacle information in the first direction and the obstacle information in the second direction, the moving mechanism to move in the first operating environment comprises:
when the first distance reaches a first maximum threshold, the control unit first controls the robot to reduce a moving speed and then controls the robot to rotate to a third direction, wherein the third direction is opposite to the second direction.

7. The robot according to claim 6, wherein that when the first distance reaches a first maximum threshold, the control unit first controls the robot to reduce a moving speed and then controls the robot to rotate to a third direction comprises:
when the first distance reaches the first maximum threshold, the control unit controls the robot to reduce the moving speed, wherein when the first distance reaches a first minimum threshold, the moving speed of the robot is zero; and when the first distance reaches the first minimum threshold, the control unit controls the robot to rotate to the third direction; or
when the first distance reaches the first maximum threshold, the control unit controls the robot to reduce the moving speed, wherein when the first distance reaches a first minimum threshold, the moving speed of the robot is zero; when the first distance reaches the first minimum threshold, the control unit controls the robot to move in a fourth direction for a preset distance, wherein the fourth direction is opposite to the first direction; and when the robot moves toward the fourth direction for the preset distance, the control unit controls the robot to rotate to the third direction, wherein the first minimum threshold is less than the first maximum threshold; or
when the first distance reaches the first maximum threshold, the control unit controls the robot to reduce the moving speed and rotate toward the third direction at a preset rotation speed.

8. The robot according to claim 1, wherein the obstacle information in the second direction indicates a second distance between the robot and a second obstacle in the second direction, wherein
that the control unit controls, based on the obstacle information in the first direction and the obstacle information in the second direction, the moving mechanism to move in the first operating environment comprises:
when the second distance is within a preset range, the control unit controls the robot to move in a direction parallel to the second obstacle, or when the second distance is within a preset range, the control unit controls the robot to rotate in the second direction at a preset rotation speed, and when the distance between the robot and the second obstacle reaches a second minimum threshold, the control unit controls the robot to move in a direction parallel to the second obstacle, wherein the second minimum threshold is less than a minimum value within the preset range; and
when the second distance is not within the preset range, the control unit controls the robot to approach the second obstacle until the second distance reaches the second minimum threshold, and when the second distance reaches the second minimum threshold, the control unit controls the robot to move in the direction parallel to the second obstacle.

9. The robot according to claim 1, wherein an obstacle detection unit, a first position detection unit, and a target sensor are further provided on the robot body, wherein
the obstacle detection unit is connected to the position detection unit and the target sensor, wherein the obstacle detection unit is configured to detect a target obstacle in a target water region when the robot moves along an edge of the target water region, the first position detection unit is configured to obtain a first position of the robot at a target moment at which the target obstacle is detected, and the target sensor is configured to determine position information of the target obstacle relative to the robot; and
the target sensor and the first position detection unit are connected to the control unit, wherein the control unit determines a position of the target obstacle relative to the robot based on the position information of the target obstacle relative to the robot, determines a second position of the target obstacle based on the relative position and the first position of the robot at the target moment, and constructs or updates a target map of the target water region based on the second position of the target obstacle.

10. The robot according to claim 9, wherein the first position detection unit comprises a code disk and an inertial measurement unit.

11. The robot according to claim 10, wherein a depth sensor is further provided on the robot body, wherein the depth sensor is configured to determine a depth of the target water region to obtain depth information of the pool robot at the target moment.

12. The robot according to claim 9, wherein that the control unit constructs or updates a target map of the target water region based on the second position of the target obstacle comprises:
the control unit marks a voxel corresponding to the second position of the target obstacle in a three-dimensional map and controls the robot to move along the edge of the target water region by one round, wherein when it is determined that the pool robot has moved along the edge of the target water region by at least one round, the target map is obtained.

13. The robot according to claim 1, wherein a second position detection unit and an information obtaining unit are further provided on the robot body, wherein
the second position detection unit is configured to obtain a coordinate position of the robot in real time in a process in which the robot moves in a preset water region, and the information obtaining unit is configured to: when it is determined, based on the coordinate position, that the robot reaches a target water region in the preset water region, obtain target release information of a target substance, wherein the target release information corresponds to the target water region; and
the control unit controls, based on the target release information, the robot to release the target substance in the target water region.

14. The robot according to claim 13, wherein a target device is further provided on the robot body, wherein the target device is configured to store the target substance; and/or
a water quality test device is further provided on the robot body, wherein the water quality test device is capable of testing water quality of the target water region, wherein the water quality of the target water region is used to determine the target release information.

15. The robot according to claim 13, wherein a control circuit is further provided on the robot body, wherein
that the control unit controls, based on the target release information, the robot to release the target substance in the target water region comprises:
when it is determined, based on the coordinate position, that the pool robot reaches the target water region, the control unit sends a first control instruction to the control circuit, and in response to the first control instruction by using the control circuit, the control unit controls the target device to be turned on and release the target substance in the target water region based on the target release information, wherein the first control instruction comprises the target release information.

16. The robot according to claim 1, wherein a cleaning unit is further provided on the robot body, wherein the cleaning unit is capable of cleaning a preset region in a moving process of the robot, wherein the preset region is a region within a preset range of a motion path of the robot.

17. A robot system, at least comprising a robot body, a station, and a terminal, wherein the robot body is the robot body according to any one of claims 1 to 16, wherein
a first communication module is provided on the robot body, a second communication module is provided on the station, and a third communication module is provided on the terminal, wherein the first communication module of the robot body establishes a communication connection with the second communication module of the station in a preset communication mode, the second communication module communicates with the third communication module of the terminal, and the terminal is capable of sending a control instruction to control the robot.

18. The system according to claim 17, wherein the preset communication mode comprises a first communication mode and a second communication mode, the first communication module comprises a first radio frequency module and a first network module, and the second communication module comprises a second radio frequency module and a second network module, wherein the first communication mode indicates that the first radio frequency module of the robot body communicates with the second radio frequency module of the station, and the second communication mode indicates that the first network module of the robot body communicates with the second network module of the station, wherein the robot body is capable of selecting the first communication mode or the second communication mode based on a type of a target environment in which the robot body currently operates.

19. The robot system according to claim 17, further comprising: a relay apparatus, wherein
the relay apparatus comprises a fourth communication module, wherein the fourth communication module communicates with the first communication module in a third communication mode, enabling the relay apparatus to communicate with the robot body, and the fourth communication module communicates with the third communication module in a fourth communication mode, enabling the relay apparatus to communicate with the terminal, wherein the third communication mode is a communication mode that supports transmission of a signal in water, and the fourth communication mode is a communication mode that supports transmission of a signal in air.

20. A robot control method, comprising:
obtaining first sensing information collected by a first sensor in a first direction of a robot;
obtaining second sensing information collected by a second sensor in a second direction of the robot, wherein the first direction is a forward direction of the robot, and an angle difference between a right angle and an included angle between the second direction and the first direction is less than a preset angle; and
controlling, based on the first sensing information and the second sensing information, the robot to move in a target swimming pool, wherein the robot is configured to clean the target swimming pool, wherein
the controlling the robot to move in a target swimming pool comprises at least one of the following:
if a distance between the robot and a first obstacle in the first direction is less than a first preset value, controlling the robot to move toward a third direction away from the second direction, wherein the distance is indicated by the first sensing information; or
if a distance between the robot and a second obstacle in the second direction is greater than a second preset value, controlling the robot to deviate in the second direction to reduce the distance between the robot and the second obstacle in the second direction, wherein the distance is indicated by the second sensing information.
